# EUROPÄISCHE PATENTSCHRIFT

(11) **EP 0 439 067 B1**
(45) Veröffentlichungstag und Bekanntmachung des Hinweises auf die Patenterteilung: **04.08.1993**
(21) Anmeldenummer: 91100563.5
(22) Anmeldetag: 18.01.1991
(51) Int. Cl.: A01D 78/10

(54) **Landwirtschaftliche Arbeitsmaschine**
Agricultural machine
Machine agricole

(30) Priorität: 23.01.1990 DE 9000691 U
(43) Veröffentlichungstag der Anmeldung: 31.07.1991
(73) Patentinhaber: Fella-Werke GmbH, D-90537 Feucht (DE)
(72) Erfinder: Pürrer, Josef, W-8501 Feucht (DE); Kohl, Bernhard, W-8501 Winkelhaid (DE)
(74) Vertreter: Matschkur, Götz, Lindner Patent- und Rechtsanwälte

(56) Entgegenhaltungen:
- DE-A- 1 482 213
- DE-A- 1 632 781
- DE-A- 2 125 847
- DE-U- 8 023 840
- DE-U- 8 807 385
- FR-A- 1 527 547
- FR-A- 1 574 280

## Beschreibung

Die Erfindung richtet sich auf eine landwirtschaftliche Arbeitsmaschine mit einem auf Laufrädern abgestützten und mit Arbeitswerkzeugen besetzten Maschinenrahmen, der aus einer Stellung von etwa 90° zur Fahrtrichtung in Schrägstellungen zu dieser verstellbar ist und in dem eine Antriebswelle verläuft, wobei mindestens ein Laufrad um eine Achse schwenkbar ist, an deren oberen Ende ein in verschiedenen Schwenkstellungen feststellbares Schwenkarm befestigt ist.

Diese Arbeitsmaschinen finden bevorzugt für die Heuwerbung Verwendung, sind aber nicht hierauf beschränkt, sondern kommen auch für Bodenbearbeitung oder andere Erntearbeiten in Betracht.

Um große Flächenleistungen zu erzielen, weisen diese landwirtschaftlichen Maschinen eine entsprechend große Arbeitsbreite und eine Mehrzahl von an dem Maschinenrahmen gelagerte Arbeitswerkzeuge auf. Der durch Laufräder auf dem Boden abgestützte Maschinenrahmen ist im allgemeinen mit einem Anbaubock versehen, der über mehrere Lenker an die Schlepperhydraulik angebaut ist. Eine andere Alternative besteht darin, daß die Maschine mittels einer Zugdeichsel an den Schlepper angehängt ist. In der normalen Arbeitsstellung verläuft der Maschinenrahmen etwa im rechten Winkel zur Fahrtrichtung, die mit der Schlepperlängsachse übereinstimmt. Das z.B. bei Heuwendemaschinen von den kreiselförmigen Arbeitswerkzeugen erfaßte Erntegut wird fächerförmig nach hinten weggeschleudert und auf einer die Maschinenbreite seitlich übersteigenden Breite abgelagert. Bei der Arbeit im Bereich des Feldrandes erweist sich dieses sogenannte "Überwerfen" deshalb als nachteilig, weil das Erntegut in andere Fruchtfelder oder auf den Nachbargrund gelangt, was beides unerwünscht ist. Um dies zu vermeiden, wird in diesem Fall die Arbeitsmaschine schräg zur Fahrtrichtung angestellt. Hierzu werden die die Maschine abstützenden Laufräder nach der entsprechenden Seite verschwenkt, so daß der Maschinenrahmen seine gewünschte Schrägstellung einnimmt. Bei Maschinen mit kleiner Arbeitsbreite bereitet das Verschwenken der Räder bei der angehobenen Maschine keine Schwierigkeiten. Dagegen ist bei Maschinen mit größerer Arbeitsbreite dieser Vorgang des Verschwenkens der Stützräder von Hand mit einem beträchtlichen Zeitaufwand verbunden. Das Verstellen ist vor allem dann mit einer außerordentlich großen Unfallgefahr verbunden, wenn diese Arbeit nicht vom Schlepperfahrer selbst, sondern von einer Hilfsperson vorgenommen wird. Durch unbeabsichtigtes Einkuppeln der Zapfwelle würden sich nämlich die Arbeitswerkzeuge in Bewegung setzen und die Bedienungsperson schwer gefährden oder gar verletzen. Bei gezogenen Maschinen größerer Breite ist die Verschwenkung der Stützräder praktisch ausgeschlossen. Man hat deshalb versucht, durch eine Art Vorwahl den Vorgang der Schrägstellung der Stützräder in zwei Phasen durchzuführen. Nach dem Entriegeln der Stützräder und Einstellen einer entsprechenden Vorwahl schwenken beim Anfahren des Schleppers die Räder in die gewünschte Schrägstellung und verriegeln sich dort. Eine weitere Verbesserung sieht vor, die Schwenkachsen der Laufräder entweder einzeln oder mehrere gemeinsam durch oberhalb des Rahmens verstellbar angeordnete Bedienungselemente zu verschwenken. Diese Maßnahme setzt verschiedene konstruktive Vorkehrungen voraus. Bei einer vorbekannten Ausführungsform einer Heuwerbungsmaschine wird die Antriebswelle für die Arbeitswerkzeuge im Bereich einer im Rahmen gelagerten Schwenkachse für ein Stützrad unterbrochen, und die Antriebsübertragung erfolgt durch ein Kegelradgetriebe mit je einem Kegelrad an jeder Seite des dem Arbeitskreisel zugeordneten Tellerrades. Die Führung der Schwenkachse des Laufrades bis über den Maschinenrahmen hinaus wird dadurch nicht behindert, jedoch wird das Getriebe erheblich aufwendiger. Eine andere vorbekannte Ausführungsform geht davon aus, daß die Schwenkachse des Laufrades im Kreuzungsbereich mit der Antriebswelle erheblich verstärkt wird und eine schlitzartige Durchführung für die Antriebswelle erhält. Auch diese Ausführungsform ist kostenmäßig außerordentlich aufwendig. Es besteht deshalb das dringende Bedürfnis nach Abhilfe und einer Konstruktion, die die Nachteile der vorbekannten Ausführungsformen beseitigt und die Konstruktion vereinfacht sowie die Kosten senkt.

Erfindungsgemäß wird dieses Problem bei einer landwirtschaftlichen Arbeitsmaschine der eingangs bezeichneten Gattung dadurch gelöst, daß die Laufrad-Schwenkachse unterhalb der Antriebswelle endet und der Schwenharm aus dem Rahmengehäuse seitlich herausgeführt ist. Diese Maßnahme vermeidet zunächst eine Unterbrechung der im Rahmen gelagerten Antriebswelle, was erhebliche Einsparungen mit sich bringt. Da bei derartigen Maschinen die Schwenkachse ein mit einem Kegelrad auf der Antriebswelle kämmendes Tellerrad aufweist, welches von der Laufrad-Schwenkachse durchsetzt wird, wird der Schwenkarm am oberen Ende der Schwenkachse so angebracht, daß er in dem Raum zwischen dem Tellerrad und der Antriebswelle zu liegen kommt. Er behindert dann keines der beiden Antriebselemente und erhält andererseits eine für den erforderlichen Schwenkwinkel ausreichende Beweglichkeit. Bevorzugt ist der Schwenkarm zwischen der Antriebswelle und dem Tellerrad nach oben gekröpft, und er durchsetzt nach einem anderen Merkmal der Erfindung etwa in Höhe der Antriebswelle einen im Rahmengehäuse angeordneten Schlitz. Auf diese Weise bleibt auch die Antriebsverbindung hinreichend geschützt, während jedoch der Schwenkarm zur Betätigung nach außen geführt ist.

Nach einem weiteren Merkmal der Erfindung ist die Anordnung so getroffen, daß die Schlitzweite den maximalen Ausschlag des Schwenkarms begrenzt. Der Anschlag des Schwenkarms am einen oder anderen Ende des Schlitzes entspricht dann dem maximal möglichen Schwenkausschlag des jeweiligen Laufrades.

Es liegt im Rahmen der Erfindung, daß die Schwenkarme mehrerer Laufräder mittels einer etwa parallel zum Rahmen verlaufenden Zugstange verbunden sind. Auf diese Weise wird die Betätigung der Schwenkeinrichtung für mehrere Laufräder gekoppelt, so daß lediglich eine Betätigung der Zugstange ausreicht, die gewünschte Verschwenkung herbeizuführen. Vorteilhaft ist die Zugstange in verschiedenen Stellungen feststellbar. Auf diese Weise ist auch eine mehrstufige Verstellbarkeit möglich. Die Arretierung der Zugstange kann, wie die Erfindung weiter vorsieht, mittels eines am Rahmen angeordneten Rasthebels erfolgen. Dieser mag nach einem weiteren Merkmal der Erfindung in Verriegelungsrichtung unter Federkraft stehen und ein zum Schlepperfahrer geführtes Betätigungselement aufweisen, um die Raste auszulösen und damit ein Verschwenken der Laufräder der Maschine insgesamt zu gestatten. Ggf. kann die Zugstange ein mechanisches oder hydraulisches Betätigungselement aufweisen.

Es liegt im Rahmen der Erfindung, daß die Zugstange analog zu dem Maschinenrahmen aus gelenkig miteinander verbundenen Teilen besteht.

Weitere Merkmale, Einzelheiten und Vorteile der Erfindung ergeben sich aus der folgenden Beschreibung einer bevorzugten Ausführungsform der Erfindung sowie anhand der Zeichnung. Hierbei zeigen:
- Fig. 1: eine Draufsicht auf eine landwirtschaftliche Arbeitsmaschine, nämlich eine Heuwerbungsmaschine, in erfindungsgemäßer Ausgestaltung;
- Fig. 2: die Arbeitsmaschine nach Fig. 1 in Schrägstellung gegenüber der Fahrtrichtung;

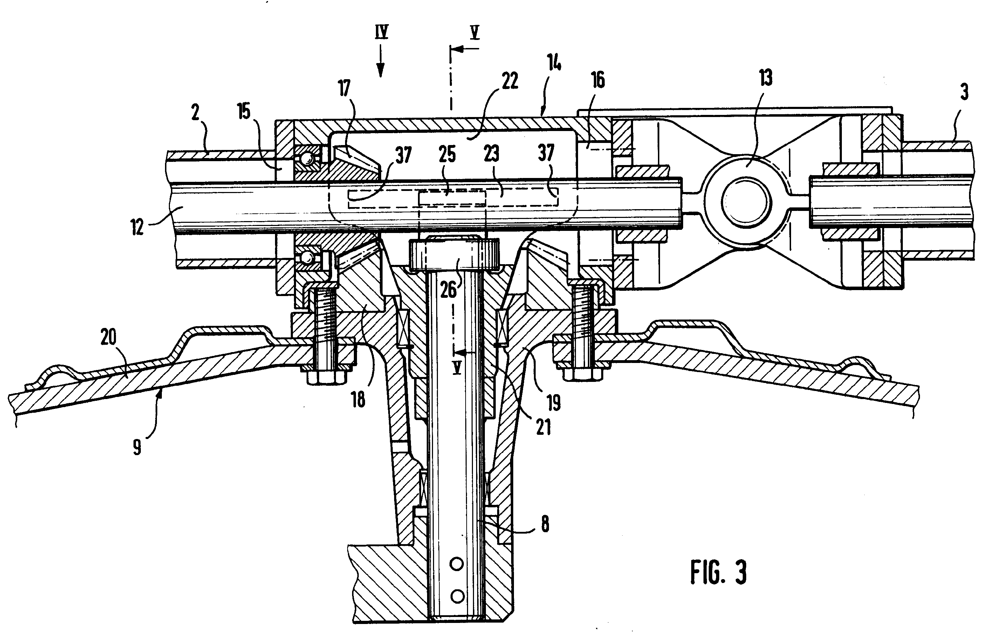

- Fig. 3: einen vertikalen Schnitt durch ein Rahmengehäuse;

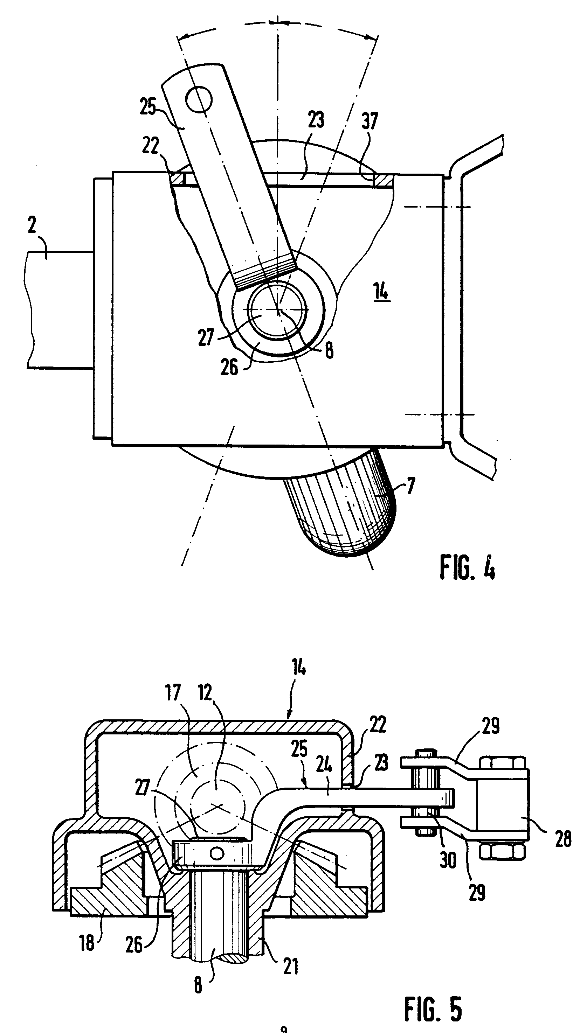

- Fig. 4: eine Draufsicht nach Pfeil IV in Fig. 3 und
- Fig. 5: einen Schnitt etwa nach Linie V - V in Fig. 3.

In der Zeichnung ist - rein beispsielsweise - eine Heuwerbungsmaschine als Ausführungsbeispiel dargestellt. Ihr Maschinenrahmen 1 besteht aus dem mittleren Rahmenteil 2 und beidseitig mit ihm verbundenen äußeren Rahmenteilen 3. Das mittlere Rahmenteil 2 ist über einen Gelenkzapfen 4 verschwenkbar über Streben 5 mit dem Dreipunktbock 6 verbunden. Der mittlere Rahmenteil ist über zwei Laufräder 7, die äußeren Rahmenteile 2 sind über je ein Laufrad 7 abgestützt. Die Schwenkachse 8 eines jeden Laufrades 7 liegt in der Mitte des Arbeitskreisels 9, der lediglich schematisch angedeutet ist. Die einzelnen Rahmenteile 2 und 3 sind um je eine Schwenkachse 10, die hier parallel zur Fahrtrichtung 11 der Maschine verläuft, gelenkig miteinander verbunden.

Im Rahmen 2, 3 verläuft die Antriebwelle 12, die im Bereich der Schwenkachse 10 zwischen je zwei Rahmenteilen 2, 3 ein Kreuzgelenk 13 aufweist. Durch das Rahmengehäuse 14 läuft die Antriebswelle 12 ohne Unterbrechung durch stirnseitige Fenster 15 u. 16 hindurch. Auf der Antriebswelle 12 ist für jeden anzutreibenden Kreisel 9 ein Kegelrad 17 angebracht, welches mit einem Tellerrad 18 kämmt. Dieses ist mit der Nabe 19 des jeweiligen Kreisels 9 verbunden, dessen Kranz mit 20 bezeichnet ist. Die Nabe 19 ist einerseits auf der Schwenkachse 8, andererseits auf dem Gehäusefortsatz 21 gelagert, der das obere Ende der Schwenkachse 8 führt. Dieser Fortsatz 21 ist Teil des Getriebegehäuses 14, dessen Seitenwand 22 einen Schlitz 23 aufweist. Dieser wird von dem nach oben abgekröpften Ende 24 eines Schwenkarms 25 durchsetzt, dessen anderes Ende 26 auf der Schwenkachse 8 befestigt ist. Das obere Ende 27 der Schwenkachse 8 endet in geringem Abstand unterhalb der Antriebswelle 12. Parallel zu dem Maschinenrahmen 1 verläuft eine Zugstange 28. Diese ist mittels der Laschen 29 und dem Bolzen 30 mit dem Ende 24 des Schwenkarms 25 gelenkig verbunden. Entsprechend der Unterteilung des Rahmens 1 ist auch die Zugstange 28 unterteilt und mit Gelenken 31 versehen. Bei 32 ist ein Rastzapfen an der Zugstange 28 angedeutet, der mit einem am Rahmen 2 gelagerten Rasthebel 33 zusammenwirkt, der in Eingriffstellung seiner Raste 34 unter Federdruck steht und durch ein Betätigungselement, z.B. ein Zugseil 35, vom Schlepperfahrer her zu betätigen ist.

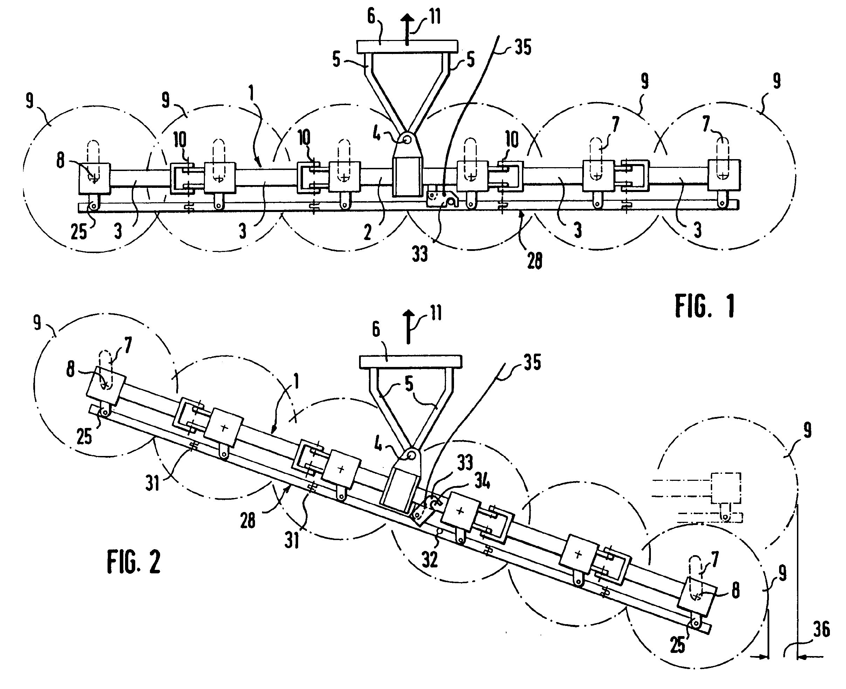

In der Betriebsstellung nach Fig. 1 verläuft der Rahmen 1 etwa im Winkel von 90° zu der Fahrtrichtung 11 der Maschine. In Fig. 2 ist eine Arbeitsstellung wiedergegeben, in welcher der Rahmen 1 in einem Winkel von etwa 60° gegenüber der Fahrtrichtung 11 verschwenkt ist. Dadurch wird die Arbeitsbreite der Maschine zu beiden Seiten um das Maß 36 vermindert. Um diese Position zu erreichen, muß der Rahmen 1 um den Schwenkpunkt 4 verschwenkt werden. Hierzu wird der Rasthebel 33 von seinem Eingriff in den Rastzapfen 32 an der Zugstange 28 gelöst und zugleich der Schlepper nach rechts gelenkt. Eine Lenkbewegung des (nicht dargestellten) Schleppers nach links würde eine entgegengesetzte Verschwenkung des Rahmens 1 gegenüber dem Dreipunktbock 6 bewirken. Durch die Bodenhaftung verschwenkt hierbei die Schwenkachse 8 der Laufräder 7 um das entsprechende Maß, damit die Laufräder 7 stets parallel zur Fahrtrichtung 11 eingestellt bleiben. Gibt der Schlepperfahrer das Betätigungselement 35 frei, schwenkt der Rasthebel 33 zurück, und die Zugstange 28 wird in der entsprechenden Stellung, hier beispielsweise in Fig. 2 wiedergegeben, verrastet. Durch die Verbindung sämtlicher Schwenkhebel 24 der Laufräder 7 mit der Zugstange 28 wird diese Verschwenkung sämtlichen Laufrädern 7 mitgeteilt. Die maximale Schwenkstellung ergibt sich durch den Anschlag des Schwenkhebels 27 an dem einen oder anderen Ende 37 in der Gehäusewand 22.

## Patentansprüche

1. Landwirtschaftliche Arbeitsmaschine mit einem auf Laufrädern abgestützten und mit Arbeitswerkzeugen besetzten Maschinenrahmen, der aus einer Stellung von etwa 90° zur Fahrtrichtung in Schrägstellung zu dieser verstellbar ist, und in dem eine Antriebswelle verläuft, wobei mindestens ein Laufrad um eine Achse schwenkbar ist, an deren oberem Ende ein in verschiedenen Schwenkstellungen feststellbarer Schwenkarm (25) befestigt ist dadurch gekennzeichnet, daß die Laufradschwenkachse (8) unterhalb der Antriebswelle (12) endet und der Schwenkarm aus dem Rahmengehäuse (14) seitlich herausgeführt ist.

2. Arbeitsmaschine nach Anspruch 1, dadurch gekennzeichnet, daß der Schwenkarm (25) zwischen der Antriebswelle (12) im Maschinenrahmen (2,3) und einem von dieser angetriebenen Tellerrad (18) des Antriebs der Arbeitswerkzeuge hindurchgeführt ist.

3. Arbeitsmaschine nach Anspruch 1 und 2, dadurch gekennzeichnet, daß der Schwenkarm (25) zwischen der Antriebswelle (12) und dem Tellerrad (18) nach oben abgekröpft ist.

4. Arbeitsmaschine nach Anspruch 1 bis 3, dadurch gekennzeichnet, daß der Schwenkarm (25) einen etwa in Höhe der Antriebswelle (12) im Rahmengehäuse (14) angeordneten Schlitz (23) durchsetzt.

5. Arbeitsmaschine nach Anspruch 4, dadurch gekennzeichnet, daß die Schlitzweite den maximalen Ausschlag des Schwenkarms (25) begrenzt.

6. Arbeitsmaschine nach mindestens einen der Ansprüche 1 bis 5, dadurch gekennzeichnet, daß die Schwenkarme (25) mehrerer Laufräder (7) mittels einer etwa parallel zum Rahmen (2,3) verlaufenden Zugstange (28) verbunden sind.

7. Arbeitsmaschine nach Anspruch 6, dadurch gekennzeichnet, daß die Zugstange (28) in verschiedenen Stellungen feststellbar ist.

8. Arbeitsmaschine nach Anspruch 6 und 7, dadurch gekennzeichnet, daß die Zugstange (28) mittels eines am Rahmen (2,3) angeordneten Rasthebels (33) feststellbar ist.

9. Arbeitsmaschine nach Anspruch 8, dadurch gekennzeichnet, daß der Rasthebel (33) in Verriegelungsrichtung unter Federkraft steht und ein zum Schlepperfahrer geführtes Betätigungselement (35) aufweist.

10. Arbeitsmaschine nach Anspruch 6 und 7, dadurch gekennzeichnet, daß die Zugstange (28) ein mechanisches oder hydraulisches Betätigungselement aufweist.

11. Arbeitsmaschine nach Anspruch 6, dadurch gekennzeichnet, daß die Zugstange (28) analog zu dem Maschinenrahmen (2,3) aus gelenkig miteinander verbundenen Teilen besteht.

## Claims

1. Agricultural machine, having a machine frame supported on running wheels and equipped with tools, the frame being adjustable from a position of approximately 90° to the direction of travel to a position oblique thereto, and in which frame a drive shaft extends, wherein at least one running wheel rotates about a shaft, at whose upper end a swivel arm (25) fixable in various positions of rotation is fixed, characterised in that the running wheel pivotal axis (8) ends below the drive shaft (12) and the swivel arm passes laterally out of the frame housing (14).

2. Machine according to claim 1, characterised in that the swivel arm (25) passes between the drive shaft (12) in the machine frame (2, 3) and a ring gear (18), driven thereby, of the drive of the tools.

3. Machine according to claim 1 and 2, characterised in that the swivel arm (25) is bent upwards between the drive shaft (12) and the ring gear (18).

4. Machine according to claim 1 to 3, characterised in that the swivel arm (25) penetrates a slot (23) in the frame housing (14) located approximately at the level of the drive shaft (12).

5. Machine according to claim 4, characterised in that the slot width defines the maximum deflection of the swivel arm (25).

6. Machine according to at least one of claims 1 to 5, characterised in that the swivel arms (25) of a plurality of running wheels (7) are connected by means of a drawbar (28) extending approximately parallel to the frame (2, 3).

7. Machine according to claim 6, characterised in that the drawbar (28) is fixable in different positions.

8. Machine according to claim 6 and 7, characterised in that the drawbar (28) is fixable by means of a catch lever (33) mounted on the frame (2, 3).

9. Machine according to claim 8, characterised in that the catch lever (33) is under spring tension in the locking direction and has an actuating element (35) passing to the tractor driver.

10. Machine according to claim 6, and 7, characterised in that the drawbar (28) has a mechanical or hydraulic actuating element.

11. Machine according to claim 6, characterised in that the drawbar (28) consists of parts that are pivotably connected together, similarly to the machine frame (2, 3).

## Revendications

1. Machine agricole comportant un châssis de machine qui est supporté sur des roues de déplacement et équipé d'outils de travail, qui peut être déplacé d'une position, dans laquelle il forme environ un angle de 90° par rapport à la direction d'avancement, dans une position oblique par rapport à celle-ci, et dans lequel s'étend un arbre d'entraînement, une roue de déplacement au moins étant susceptible de pivoter autour d'un axe à l'extrémité supérieure duquel est fixé un bras de pivotement (25) pouvant être immobilisé dans différentes positions de pivotement, caractérisée en ce que l'axe de pivotement de roue de déplacement (8) se termine en-dessous de l'arbre d'entraînement (12) et en ce que le bras de pivotement sort latéralement hors du carter de châssis (14).

2. Machine selon la revendication 1, caractérisée en ce que le bras de pivotement (25) passe entre l'arbre d'entraînement (12) dans le châssis (2, 3) de la machine et une couronne dentée (18), entraînée par cet arbre, du dispositif d'entraînement des outils de travail.

3. Machine selon les revendications 1 et 2, caractérisée en ce que le bras de pivotement (25) est coudé vers le haut à angle droit, entre l'arbre d'entraînement (12) et la couronne dentée (18).

4. Machine selon les revendications 1 à 3, caractérisée en ce que le bras de pivotement (25) traverse une fente (23) agencée dans le carter de châssis (14), environ à hauteur de l'arbre d'entraînement (12).

5. Machine selon la revendication 4, caractérisée en ce que la largeur de la fente limite l'amplitude de déviation maximale du bras de pivotement (25).

6. Machine selon l'une au moins des revendications 1 à 5, caractérisée en ce que les bras de pivotement (25) de plusieurs roues de déplacement (7) sont reliés au moyen d'une barre de traction (28) s'étendant environ parallèlement au châssis (2, 3).

7. Machine selon la revendication 6, caractérisée en ce que la barre de traction (28) peut être immobilisée dans différentes positions.

8. Machine selon la revendication 6 ou 7, caractérisée en ce que la barre de traction (28) peut être immobilisée au moyen d'un levier d'encliquetage (33) agencé au châssis (2, 3).

9. Machine selon la revendication 8, caractérisée en ce que le levier d'encliquetage (33) est soumis à la force d'un ressort dans la direction du verrouillage, et présente un élément d'actionnement (35) conduit au conducteur du tracteur.

10. Machine selon les revendications 6 et 7, caractérisée en ce que la barre de traction (28) présente un élément d'actionnement mécanique ou hydraulique.

11. Machine selon la revendication 6, caractérisée en ce que la barre de traction (28), d'une manière analogue au châssis (2, 3) de la machine, est constituée de plusieurs parties reliées entre elles de manière articulée.
